# FASCICULE DE BREVET EUROPEEN

(11) **EP 3 259 400 B1**
(45) Date de publication et mention de la délivrance du brevet: **07.07.2021**
(21) Numéro de dépôt: 16705143.2
(22) Date de dépôt: 17.02.2016
(51) Int. Cl.: D07B 1/06, D07B 5/12

(54) **CÂBLE MULTITORONS DE STRUCTURE 1XN POUR ARMATURE DE PROTECTION DE PNEUMATIQUE**
MEHRADRIGES KABEL MIT 1XN-STRUKTUR ZUR SCHÜTZENDEN VERSTÄRKUNG EINES REIFENS
MULTI-STRAND CABLE OF 1XN STRUCTURE FOR PROTECTIVE REINFORCEMENT OF A TIRE

(30) Priorité: 19.02.2015 FR 1551378
(43) Date de publication de la demande: 27.12.2017
(73) Titulaire: Compagnie Générale des Etablissements Michelin, 63000 Clermont-Ferrand (FR)
(72) Inventeur: PIRONNEAU, Natacha, 63040 Clermont-Ferrand Cedex 9 (FR); CLEMENT, Emmanuel, 63040 Clermont-Ferrand Cedex 9 (FR); RAPENNE, Thibault, 63040 Clermont-Ferrand Cedex 9 (FR); COLIN, Eric, 63040 Clermont-Ferrand Cedex 9 (FR); CHAVAROT, Pascal, 63040 Clermont-Ferrand Cedex 9 (FR)
(74) Mandataire: Desbordes, Guillaume
(86) Numéro de dépôt international: PCT/EP2016/053347
(87) Numéro de publication internationale: WO 2016/131862

(56) Documents cités:
- WO-A1-2011/134900
- WO-A1-2013/107570
- JP-A- S5 841 638
- JP-A- H06 200 491
- JP-A- H07 292 585
- US-A1- 2012 159 919

## Description

L'invention concerne un procédé de fabrication d'un câble multitorons, un câble multitorons susceptibles d'être obtenu par ce procédé et un pneumatique comprenant ce câble.

On connait de l'état de la technique un pneumatique pour véhicule de génie civil à armature de carcasse radiale comprenant une bande de roulement, deux bourrelets inextensibles, deux flancs reliant les bourrelets à la bande de roulement et une armature de sommet, disposée circonférentiellement entre l'armature de carcasse et la bande de roulement. Cette armature de sommet comprend plusieurs nappes de caoutchouc, éventuellement renforcées par des éléments de renforts tels que des câbles métalliques.

L'armature de sommet comprend une armature de travail, une armature de protection et éventuellement d'autres armatures, par exemple une armature de frettage.

L'armature de protection comprend une ou plusieurs nappes de protection comprenant plusieurs éléments de renfort de protection faisant un angle compris entre 15° à 30° avec la direction circonférentielle du pneumatique. Généralement, chaque élément de renfort de protection est un câble comprenant plusieurs fils unitaires métalliques.

On connait du document WO2011/134900 un câble permettant de renforcer de telles nappes de protection. Le câble est du type multitorons et de structure 1xN. Le câble comprend une unique couche de N=4 torons enroulés en hélice. Chaque toron comprend, d'une part, une couche interne de M=4 fils internes enroulés en hélice et une couche externe de P=9 fils externes enroulés en hélice autour de la couche interne.

Le procédé de fabrication du câble comprend une première étape d'assemblage individuel de chacun des N torons et une deuxième étape d'assemblage collectif des N torons au cours de laquelle on enroule en hélice les N torons pour former le câble. Puis, lors d'une étape ultérieure de calandrage, on revêt simultanément plusieurs câbles de part et d'autre par deux bandes de gomme permettant ainsi de former une nappe de protection.

Toutefois, lors de la deuxième étape d'assemblage collectif des N torons, on a remarqué que certains des M fils internes sortaient radialement entre les fils externes. Cette sortie de fils internes est présente lorsqu'il existe des espaces entre les P fils de la couche externe, mais également lorsqu'il n'existe pas d'espaces entre le P fils de la couche externe. Ainsi, le câble présente un diamètre variable, ce dernier étant plus élevé aux endroits où sont situés les sorties de fils internes. Une telle variation de diamètre est notamment problématique lors du passage du câble dans les outils de fabrication du câble, notamment lors de l'étape de calandrage. Une solution pour éviter de telles variations de diamètre est d'isoler la portion du câble présentant la sortie de fils internes, la couper puis d'abouter les deux extrémités résultantes du coupage du câble. Or, les sorties de fils externes apparaissant à une fréquence de l'ordre du pas d'assemblage de l'étape d'assemblage collectif (tous les 15 mm dans le cas du câble de WO2011/134900), une telle solution est industriellement inenvisageable.

L'invention a pour but de permettre la fabrication d'un câble dépourvu ou quasiment dépourvu de fils internes sortant radialement entre les fils externes.

A cet effet l'invention a pour objet un procédé de fabrication d'un câble multitorons de structure 1xN comprenant une unique couche de N torons enroulés en hélice, chaque toron comprenant :
- une couche interne de M fils internes enroulés en hélice,
- une couche externe de P fils externes enroulés en hélice autour de la couche interne,
le procédé comprenant:
- une étape d'assemblage individuel par retordage de chacun des N torons au cours de laquelle, et dans l'ordre chronologique:
   - on enroule en hélice les M fils internes pour former la couche interne,
   - on enroule en hélice les P fils externes autour de la couche interne, et
   - on allonge les M fils internes et les P fils externes de sorte que l'allongement structurel associé aux P fils externes de chaque toron est supérieur ou égal à 0,05%,
- une étape d'assemblage collectif par retordage des N torons au cours de laquelle on enroule en hélice les N torons pour former le câble ;
l'allongement structural associé aux P fils externes étant déterminé comme suit :
- on réalise une courbe force allongement d'un toron conformément à la norme ISO 6892-1 d'octobre 2009, la courbe obtenue comprenant trois parties se succédant dans cet ordre en se déplaçant vers les allongements croissants : une première partie correspond au rapprochement des M fils internes les uns des autres ; une deuxième partie correspond au rapprochement des P fils externes les uns des autres ; une troisième partie correspond à l'allongement élastique des M fils internes et P fils externes,
- on trace, pour chacune des parties, la tangente à cette partie, la tangente à la première partie coupe l'axe des abscisses en un point Asi correspondant à l'allongement structurel associé à l'écartement des M fils internes, la tangente à la deuxième partie coupe l'axe des abscisses en un point Ase, la tangente à la troisième partie coupe l'axe des abscisses en un point As correspondant à l'allongement structurel du toron, la différence Asp=As-Ase correspondant à l'allongement structurel Asp associé à l'écartement des P fils externes.

Grâce au procédé selon l'invention, le câble est dépourvu ou quasiment dépourvu de sortie radiale de fils internes entre les fils externes. En effet, les inventeurs à l'origine de l'invention ont mis en évidence que lors de l'étape d'assemblage collectif des N torons au cours de laquelle on enroule en hélice les N torons pour former le câble, les fils internes étaient, au sein de chaque toron, mis en compression radiale par les P fils externes. Cette mise en compression, générée par un raccourcissement du pas des fils externes supérieur au raccourcissement du pas des fils internes lors de l'étape d'assemblage collectif des N torons, avait, dans l'état de la technique, pour effet de faire sortir radialement les fils internes entre les fils externes.

Les inventeurs à l'origine de l'invention ont découvert qu'en allongeant les P fils externes de façon à avoir un allongement structurel associé à ces P fils externes relativement élevé, c'est-à-dire supérieur ou égal à 0,05%, on écartait suffisamment les P fils externes pour éviter la mise en compression des M fils internes lors de l'étape d'assemblage collectif des N torons. En effet, l'écartement des P fils externes permet de donner une longueur suffisante aux fils externes permettant, lors de l'étape d'assemblage collectif des N torons, de s'assurer que, même si le raccourcissement des pas est différent entre les couches interne et externe, les fils internes ne soient pas mis en compression par les fils externes.

Les allongements structuraux Asm et Asp associés respectivement aux M fils internes et P fils externes sont déterminés et définis comme suit. On réalise une courbe force allongement d'un toron conformément à la norme ISO 6892-1 d'octobre 2009. La courbe obtenue comprend trois parties se succédant dans cet ordre en se déplaçant vers les allongements croissants. La première partie correspond au rapprochement des M fils internes les uns des autres. La deuxième partie correspond au rapprochement des P fils externes les uns des autres. La troisième partie correspond à l'allongement élastique des M fils internes et P fils externes. On trace, pour chacune des parties, la tangente à cette partie. La tangente à la première partie coupe l'axe des abscisses en un point Asi correspondant à l'allongement structurel associé à l'écartement des M fils internes. La tangente à la deuxième partie coupe l'axe des abscisses en un point Ase, la différence Asm=Ase-Asi correspondant à l'allongement structurel Asm associé à l'écartement des M fils internes. La tangente à la troisième partie coupe l'axe des abscisses en un point As correspondant à l'allongement structurel du toron, la différence Asp=As-Ase correspondant à l'allongement structurel Asp associé à l'écartement des P fils externes.

Avantageusement, l'allongement structurel de chaque toron associé aux P fils externes est supérieur ou égal à 0,07%, de préférence supérieur ou égal à 0,09 %. Dans un mode de réalisation avantageux, l'allongement structurel de chaque toron associé aux P fils externes est supérieur ou égal à 0,15%, voire supérieur ou égal à 0,20%, de préférence supérieur ou égal à 0,25 %. Plus l'allongement structurel associé aux P fils externes est élevé, plus l'écartement des P fils externes est important à l'issue de l'étape d'assemblage individuel de chaque toron, moins les M fils internes sont mis en compression.

Avantageusement, l'allongement structurel de chaque toron est supérieur ou égal à 0,10%, de préférence supérieur ou égal à 0,15% et plus préférentiellement supérieur ou égal à 0,20%. Dans un mode de réalisation avantageux, l'allongement structurel de chaque toron est supérieur ou égal à 0,25%, de préférence supérieur ou égal à 0,30% et plus préférentiellement supérieur ou égal à 0,35%.

De préférence, lors de l'étape d'assemblage individuel de chaque toron, on allonge les M fils internes et les P fils externes de sorte que chaque P fil externe présente une longueur d'allongement supérieure à une longueur d'allongement de chaque M fil interne. La longueur d'allongement est la différence entre la longueur de chaque fil après et avant l'étape d'allongement du fil.

Selon un mode de réalisation préféré, on allonge les M fils internes et les P fils externes en imposant une torsion additionnelle à chaque toron après l'enroulement en hélice des P fils externes autour de la couche interne.

La torsion additionnelle est la torsion imposée à chaque toron après l'étape d'enroulement des P fils externes. Ainsi, après cette torsion additionnelle, chaque toron présente une torsion finale égale à la somme de la torsion initiale imposée par l'assemblage des couches interne et externe et de la torsion additionnelle.

De préférence, on impose la torsion additionnelle à chaque toron au moyen d'un organe monté tournant autour d'un axe de rotation sensiblement parallèle à la direction de défilement de chaque toron dans l'organe.

Plus préférentiellement, l'organe monté tournant comprend au moins une poulie autour d'au moins une partie de laquelle on fait défiler chaque toron.

Encore plus préférentiellement, l'organe monté tournant comprend au moins deux poulies, chaque toron suivant, dans l'organe, un trajet définissant au moins une boucle autour d'au moins l'une des poulies.

Dans un mode de réalisation avantageux, lors de l'étape d'assemblage individuel de chacun des N torons, on applique :
- une tension en traction à la couche interne et
- une tension en traction à la couche externe,
la tension en traction appliquée à la couche interne étant supérieure ou égale à la tension en traction appliquée à la couche externe.

Les tensions en traction appliquées aux couches interne et externe permettent de déformer élastiquement chaque fil interne et externe. Ainsi, lors de l'étape d'assemblage individuel de chacun des N torons, on rapproche les fils internes les uns des autres de façon à rendre davantage compacte la couche interne. Ainsi, on réduit l'aération de la couche interne. On favorise donc la diminution des sorties radiales des fils internes entre les fils externes.

Dans un mode de réalisation préféré, lors de l'étape d'assemblage collectif des N torons :
- on enroule en hélice les N torons à un pas p3,
- on surtord les N torons de façon à obtenir un pas transitoire p3'<p3,
- on détord les N torons au pas p3 de façon à obtenir un couple résiduel sensiblement nul.

Ainsi, lors de l'étape de surtordage, on réduit le pas de l'assemblage afin de déformer plastiquement les fils de chacun des N torons. Cette déformation plastique est conservée lors de l'étape suivante de détordage ce qui confère au câble une aération favorisant la pénétrabilité du câble par la gomme. Le couple résiduel sensiblement nul correspond au fait que le câble est équilibré en torsion afin de pouvoir être utilisé dans les étapes ultérieures utilisant le câble. Le couple est exprimé en tours par mètres et correspond au nombre de tours que peut effectuer un câble de longueur prédéterminée autour de son axe principal lorsqu'il est laissé libre de mouvement.

Dans un mode de réalisation, au cours de l'étape d'assemblage individuel de chacun des N torons, on enroule les M fils internes et les P fils externes respectivement à des pas intermédiaires p1' et p2' et au cours de l'étape d'assemblage collectif des N torons, on enroule les N torons à un pas p3 de sorte que les M fils internes et les P fils externes présentent respectivement un pas final p1 et p2 vérifiant p2/p2'<p1/p1', de préférence 1,3.p2/p2'<p1/p1'.

Le procédé selon l'invention est particulièrement avantageux dans ce mode de réalisation dans lequel le pas des P fils externes est davantage raccourci que le pas des M fils internes lors de l'étape d'assemblage collectif et durant laquelle les M fils internes sont susceptibles d'être mis fortement en compression si on ne met pas en oeuvre le procédé selon l'invention.

On décrit également un toron comprenant :
- une couche interne de M fils internes enroulés en hélice,
- une couche externe de P fils externes enroulés en hélice autour de la couche interne,
toron dans lequel l'allongement structurel associé aux P fils externes est supérieur ou égal à 0,05%.

Un autre objet de l'invention est un câble multitorons de structure 1xN obtenu par un procédé tel que défini ci-dessus dans lequel chaque toron comprend au plus 10 sorties radiales de fils internes par mètre de toron.

Comme décrit ci-dessus, le câble selon l'invention est dépourvu ou quasiment dépourvu de sortie radiale de fils internes sur chaque toron. Par dépourvu ou quasiment dépourvu de sortie radiale, on entend que chaque toron comprend au plus 10 sorties radiales de fils internes par mètre de toron, de préférence au plus 5 sorties radiales de fils internes par mètre de toron et plus préférentiellement 2 sorties radiales de fils internes par mètre de toron.

Une sortie radiale d'un fil interne correspond à un fil interne s'étendant radialement au moins en partie radialement à l'extérieur du cercle théorique dans lequel devraient être inscrits les fils internes. Ainsi, une sortie radiale peut avoir lieu lorsqu'un fil interne est intercalé en partie ou totalement dans la couche externe. Une sortie radiale peut également avoir lieu lorsqu'un fil interne s'étend au moins en partie à l'extérieur du cercle théorique dans lequel sont inscrits les fils externes.

Avantageusement, N=3 ou N=4, de préférence N=4.

Avantageusement, M=3, 4 ou 5, de préférence M=3.

Avantageusement, P=7, 8, 9, 10 ou 11, de préférence P=8.

De préférence, la couche externe de chaque toron est non compacte.

Par définition, une couche non-compacte est telle qu'il existe des espaces entre les fils de la couche.

Préférentiellement, la couche externe de chaque toron est insaturée.

Par définition, une couche insaturée de fils est telle qu'il existe suffisamment de place dans cette couche pour y ajouter au moins un (X+1)ième fil du même diamètre que les X fils de la couche, plusieurs fils pouvant alors être au contact les uns des autres. Réciproquement, cette couche est dite saturée s'il n'existait pas suffisamment de place dans cette couche pour y ajouter au moins un (X+1)ième fil du même diamètre que les N fils de la couche.

Ainsi, le câble selon l'invention est particulièrement avantageux car il ne présente pas de sorties radiale de fils internes alors que, la couche externe étant insaturée, ces dernières seraient facilitées contrairement à un câble dont la couche externe de chaque toron serait saturée. La couche externe insaturée permet ainsi d'obtenir à la fois une excellente pénétrabilité de la gomme dans chaque toron sans que celui-ci ne comporte aucune ou presque aucune sortie radiale de fils internes.

Avantageusement, les M fils internes étant enroulés en hélice au pas p1, p1 va de 3 à 11 mm, de préférence de 5 à 9 mm.

Avantageusement, les P fils externes étant enroulés en hélice au pas p2, p2 va de 6 à 14 mm, de préférence de 8 à 12 mm.

Avantageusement, les N torons étant enroulés en hélice au pas p3, p3 va de 10 à 30 mm, de préférence de 15 à 25 mm.

Les valeurs des pas p1, p2 et p3 peuvent être adaptées par l'homme du métier afin d'obtenir les caractéristiques désirés pour le câble.

De préférence, le diamètre des fils internes et/ou externes va de 0,12 mm à 0,50 mm, de préférence de 0,25 mm à 0,45 mm et plus préférentiellement de 0,30 à 0,40 mm.

Dans un mode de réalisation, chaque toron est constitué de la couche interne et de la couche externe. Ainsi, chaque toron est du type à deux couches.

L'invention a encore pour objet un pneumatique pour véhicule de génie civil comprenant un câble multitorons tel que décrit ci-dessus.

De préférence, le pneumatique comprend une bande de roulement et une armature de sommet agencée radialement à l'intérieur de la bande de roulement, l'armature de sommet comprenant :
- une armature de protection comprenant au moins élément de renfort, dit de protection, comprenant un câble multitorons tel que décrit ci-dessus ; et
- une armature de travail agencée radialement à l'intérieur de l'armature de protection.

Dans un mode de réalisation, l'armature de protection est intercalée radialement entre la bande de roulement et l'armature de travail.

Avantageusement, l'armature de protection comprenant au moins une nappe de protection comprenant le ou plusieurs éléments de renfort de protection, le ou les éléments de renfort de protection font un angle au moins égal à 10°, de préférence allant de 10° à 35° et plus préférentiellement de 15° à 30° avec la direction circonférentielle du pneumatique.

Dans un mode de réalisation, l'armature de travail comprenant au moins une nappe de travail comprenant des éléments de renfort, dit de travail, les éléments de renfort de travail font un angle au plus égal à 60°, de préférence allant de 15° à 40° avec la direction circonférentielle du pneumatique.

Avantageusement, l'armature de sommet comprend une armature de frettage comprenant au moins une nappe de frettage.

Dans un mode de réalisation, chaque nappe de frettage comprenant des éléments de renfort, dit de frettage, les éléments de renfort de frettage font un angle au plus égal à 10°, de préférence allant de 5° à 10° avec la direction circonférentielle du pneumatique.

De préférence, l'armature de frettage est agencée radialement à l'intérieur de l'armature de travail.

Avantageusement, le pneumatique comprenant une armature de carcasse comprenant au moins une nappe de carcasse comprenant des éléments de renfort, dit de carcasse, les éléments de renfort de carcasse font un angle supérieur ou égal à 65°, de préférence à 80° par rapport à la direction circonférentielle du pneumatique.

Dans un mode de réalisation, le pneumatique présente une dimension de type W R U avec U≥35, de préférence U≥49 et plus préférentiellement U≥57. Cette désignation de la dimension du pneumatique est conforme à la nomenclature de l'ETRTO (« European Tyre and Rim Technical Organisation »).

Par fil, on entend un monofilament. Lorsqu'il est métallique, le fil est un monofilament métallique comprenant une âme constitué majoritairement (c'est-à-dire pour plus de 50% de sa masse) ou intégralement (pour 100% de sa masse) d'un matériau métallique, par exemple en acier au carbone, optionnellement revêtu d'une couche métallique comprenant du zinc, du cuivre, de l'étain et les alliages de ces métaux, par exemple une couche métallique de laiton. Préférentiellement, les M fils internes et les P fils externes sont métalliques. Chaque fil est préférentiellement en acier, plus préférentiellement en acier perlitique (ou ferrito-perlitique) au carbone, ou encore en acier inoxydable (par définition, acier comportant au moins 11% de chrome et au moins 50% de fer).

Lorsqu'un acier au carbone est utilisé, sa teneur en carbone (% en poids d'acier) est de préférence comprise entre 0,5% et 0,9%. On utilise de préférence un acier du type steel cord à résistance normale (dit "NT" pour " Normal Tensile ") ou à haute résistance (dit "HT" pour " High Tensile ") dont la résistance en traction (Rm) est de préférence supérieure à 2000 MPa, plus préférentiellement supérieure à 2500 MPa et inférieure à 3000 MPa (mesure effectuée en traction selon la norme ISO 6892-1 de 2009. On pourra utiliser des aciers à résistance très élevée (dit "UHT" pour "Ultra High Tensile") ou méga élevée (dit "MT" pour "Mega Tensile"). De tels aciers sont décrits dans le document EP2433814.

Dans la présente demande, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

L'invention sera mieux comprise à la lecture de la description qui va suivre, donnée uniquement à titre d'exemple non limitatif et faite en se référant aux dessins dans lesquels :
- la figure 1 est une vue en coupe simplifiée d'un pneumatique selon l'invention ;
- la figure 2 est une vue de détails de la partie I du pneumatique de la figure 1 ;
- la figure 3 est une vue schématique en coupe perpendiculaire à l'axe du câble (supposé rectiligne et au repos) d'un câble selon un premier mode de réalisation de l'invention ;
- la figure 4 est une vue schématique en coupe perpendiculaire à l'axe du câble (supposé rectiligne et au repos) d'un câble selon un deuxième mode de réalisation de l'invention ;
- les figures 5 et 6 sont des vues schématiques d'une installation permettant de mettre en oeuvre le procédé selon l'invention,
- la figure 7 est une vue schématique d'un élément de l'installation de la figure 5 ; et
- la figure 8 est un graphique illustrant les courbes force-allongement d'un toron d'un des câbles selon l'invention des figures 3 et 4 et d'un toron de l'état de la technique.

### EXEMPLE DE PNEUMATIQUES ET DE CABLES SELON L'INVENTION

Sur les figures, on a représenté un repère X, Y, Z correspondant respectivement aux orientations habituelles axiale, radiale et circonférentielle d'un pneumatique.

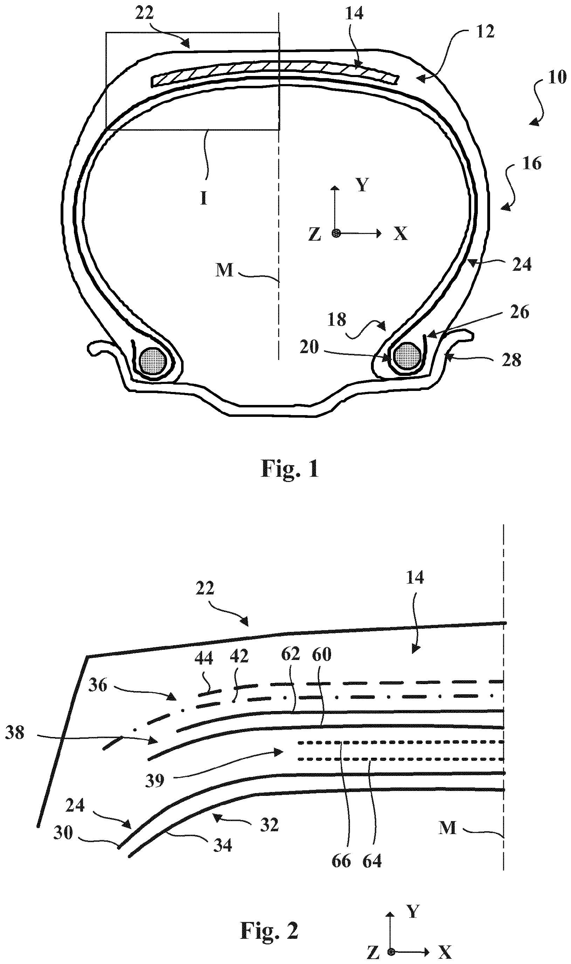

On a représenté sur les figures 1 et 2 un pneumatique pour véhicule de type génie civil, par exemple de type « dumper », et désigné par la référence générale 10. Ainsi, le pneumatique 10 présente une dimension de type W R U, par exemple 40.00 R 57 ou encore 59/80 R 63.

De façon connue pour l'homme du métier, W, désigne :
- lorsqu'il est sous la forme H/B, le rapport nominal d'aspect H/B tel que défini par l'ETRTO (H étant la hauteur de la section du pneumatique et B étant la largeur de la section du pneumatique)
- lorsqu'il est sous la forme H.00 ou B.00, dans lequel H=B, H et B étant tel que défini ci-dessus.
U représente le diamètre, en pouces, du siège de la jante sur laquelle le pneumatique est destiné à être monté, R désigne le type d'armature de carcasse du pneumatique, ici radiale. On a U≥35, de préférence U≥49 et plus préférentiellement U≥57.

Le pneumatique 10 comporte un sommet 12 renforcé par une armature de sommet 14, deux flancs 16 et deux bourrelets 18, chacun de ces bourrelets 18 étant renforcé avec une tringle 20. Le sommet 12 est surmonté d'une bande de roulement 22. L'armature de sommet 14 est agencée radialement à l'intérieur de la bande de roulement 22. Une armature de carcasse 24, agencée radialement à l'intérieur de l'armature de sommet 14, est ancrée dans chaque bourrelet 18, ici enroulée autour de chaque tringle 20 et comprend un retournement 26 disposé vers l'extérieur du pneumatique 10 qui est ici représenté monté sur une jante 28.

L'armature de carcasse 24 comprend au moins une nappe de carcasse 30 comprenant des éléments de renfort, dit de carcasse (non représentés). Les éléments de renfort de carcasse font un angle supérieur ou égal à 65°, de préférence à 80° par rapport à la direction circonférentielle Z du pneumatique 10. Des exemples de tels éléments de renfort de carcasse sont décrits dans les documents EP0602733 ou bien encore EP0383716.

Le pneumatique 10 comprend également une nappe d'étanchéité 32 constituée d'un élastomère, par exemple du butyl, (communément appelée "gomme intérieure") qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend, radialement de l'extérieur vers l'intérieur du pneumatique 10, une armature de protection 36 agencée radialement à l'intérieur de la bande de roulement 22, une armature de travail 38 agencée radialement à l'intérieur de l'armature de protection 36 et une armature de frettage 39 agencée radialement à l'intérieur de l'armature de travail 38. Ainsi, l'armature de protection 36 est intercalée radialement entre la bande de roulement 22 et l'armature de travail 38.

L'armature de protection 36 comprend des première et deuxième nappes de protection 42, 44, la première nappe de protection 42 étant agencée radialement à l'intérieur de la deuxième nappe de protection 44. Les première et deuxième nappes de protection 42, 44 comprennent des éléments de renfort, dits de protection (non représentés).

Les éléments de renfort de protection sont agencés côte à côte parallèlement les uns aux autres selon une direction principale sensiblement perpendiculaire à la direction générale selon laquelle ces éléments de renfort s'étendent. Les éléments de renfort de protection sont croisés d'une nappe de protection 42, 44 à l'autre. Chaque élément de renfort de protection, ici la direction générale selon laquelle ces éléments de renfort s'étendent, fait un angle au moins égal à 10°, de préférence allant de 10° à 35° et plus préférentiellement de 15° à 30° avec la direction circonférentielle Z du pneumatique 10. Ici, l'angle est égal à 24°.

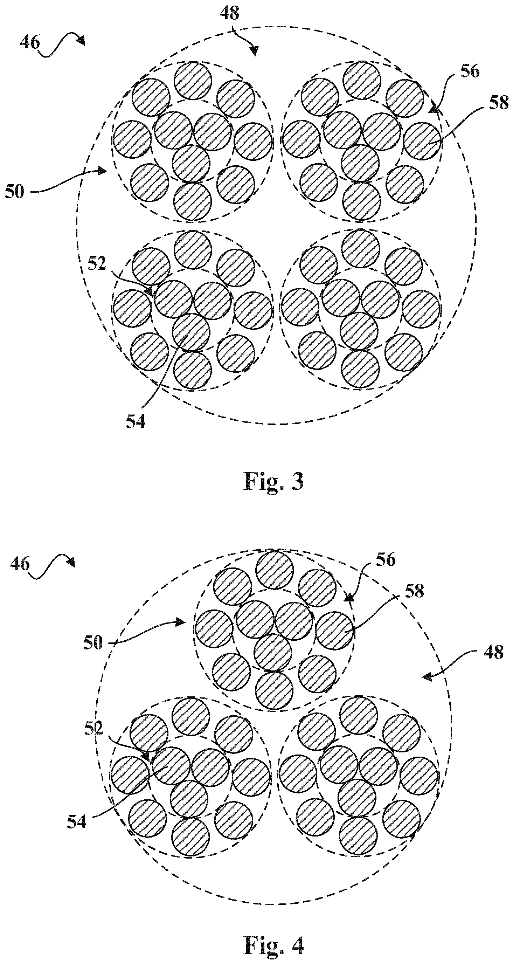

En référence à la figure 3, chaque élément de renfort de protection comprend un câble multitorons 46 de structure 1xN. Le câble 46 comprend une unique couche 48 de N torons 50 enroulés en hélice selon un pas p3. Les N torons 50 sont enroulés dans un sens Z ou S.

Chaque toron 50 comprend une couche interne 52 de M fils internes 54 enroulés en hélice selon un pas p1 et une couche externe 56 de P fils externes 58 enroulés en hélice autour de la couche interne 52 selon un pas p2. En l'espèce, chaque toron 50 est constitué de la couche interne 52 et de la couche externe 56. Chaque toron 50 est ainsi dépourvu de fil de frette.

Chaque fil interne 54 et externe 58 présente un diamètre allant de 0,12 mm à 0,50 mm, de préférence de 0,25 mm à 0,45 mm et plus préférentiellement de 0,30 à 0,40 mm et ici égal à 0,35 mm. Chaque fil interne 54 et externe 58 est métallique, ici en acier de grade HT (« High Tensile ») présentant une résistance à rupture égale à 2765 MPa. D'autres grades d'acier peuvent bien évidemment être utilisés. Dans d'autres modes de réalisation, le diamètre des fils internes 54 peut être différent du diamètre des fils externes 58.

La couche externe 56 de chaque toron 50 est non compacte et insaturée.

Le pas p1 d'enroulement des M fils internes 54 va de 3 à 11 mm, de préférence de 5 à 9 mm et est ici égal à 6,7 mm. Le pas p2 d'enroulement des P fils externes 58 va de 6 à 14 mm, de préférence de 8 à 12 mm et est ici égal à 10 mm. Enfin, le pas p3 d'enroulement des N torons 50 va de 10 à 30 mm, de préférence de 15 à 25 mm et est ici égal à 20 mm.

Les fils internes 54, les fils externes 58 et les N torons sont enroulés dans le même sens, Z ou S.

Dans le premier mode de réalisation illustré à la figure 3, on a N=3 ou N=4, et ici N=4. On a également M=3, 4 ou 5 et ici M=3. On a enfin P=7, 8, 9, 10 ou 11 et ici P=8.

Dans le deuxième mode de réalisation du câble 46 illustré à la figure 4, on a N=3, M=3 et P=8.

En revenant à la figure 2, l'armature de travail 38 comprend des première et deuxième nappes de travail 60, 62, la première nappe de travail 60 étant agencée radialement à l'intérieur de la deuxième nappe de travail 62. Les première et deuxième nappes de travail 60, 62 comprennent des éléments de renfort, dits de travail (non représentés).

Les éléments de renfort de travail sont agencés côte à côte parallèlement les uns aux autres selon une direction principale sensiblement perpendiculaire à la direction générale selon laquelle ces éléments de renfort s'étendent. Les éléments de renfort de travail sont croisés d'une nappe de travail 60, 62 à l'autre. Chaque élément de renfort de travail, ici la direction générale selon laquelle ces éléments de renfort s'étendent, fait un angle au plus égal à 60°, de préférence allant de 15° à 40° avec la direction circonférentielle Z du pneumatique 10. Ici, l'angle des éléments de renfort de la première nappe de travail est égal à 19° et l'angle des éléments de renfort de la deuxième nappe de travail est égal à 33°.

Des exemples de tels éléments de renfort de travail sont décrits dans les documents EP0602733 ou bien encore EP0383716.

L'armature de frettage 39, également appelée bloc limiteur, dont la fonction est de reprendre en partie les sollicitations mécaniques de gonflage, comprend des première et deuxième nappes de frettage 64, 66, la première nappe de frettage 64 étant agencée radialement à l'intérieur de la deuxième nappe de frettage 66.

Chaque nappe de frettage 64, 66 comprend des éléments de renfort métalliques de frettage (non représentés), par exemple des câbles métalliques tels que décrits dans FR 2 419 181 ou FR 2 419 182 et faisant un angle au plus égal à 10°, de préférence allant de 5° à 10° avec la direction circonférentielle Z du pneumatique 10. Ici l'angle est égal à 8°. Les éléments de renfort de frettage sont croisés d'une nappe de frettage 64, 66 à l'autre.

### EXEMPLE DE PROCEDE DE FABRICATION D'UN CABLE MULTITORONS SELON L'INVENTION

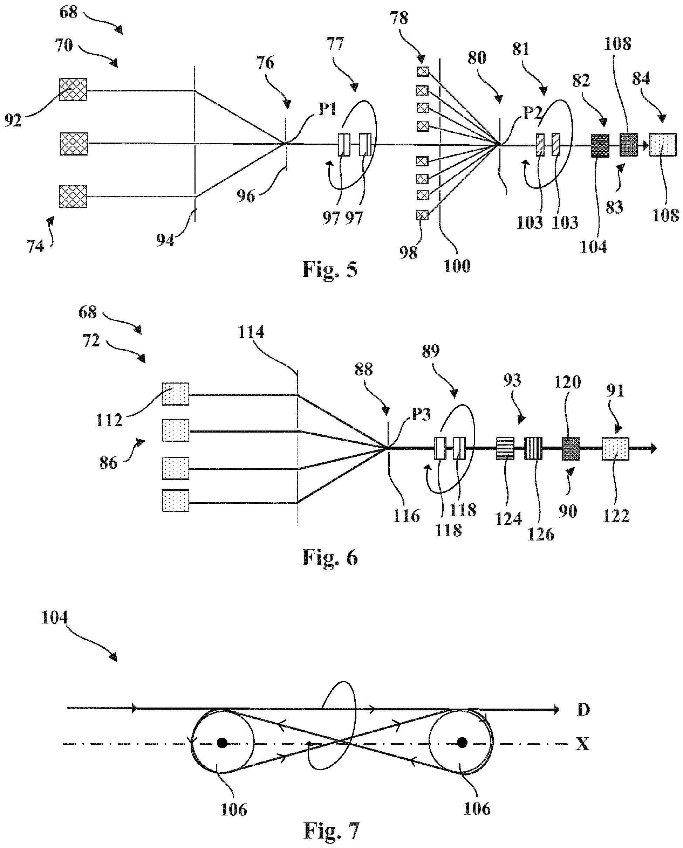

On a illustré sur les figures 5, 6 et 7 une installation 68 permettant de fabriquer le câble 46 tel que décrit ci-dessus.

L'installation 68 comprend une installation 70 de fabrication de chaque toron 50 représentée sur la figure 5 et une installation 72 d'assemblage des torons 50 représentée sur la figure 6.

On rappelle qu'il existe deux techniques possibles d'assemblage de fils métalliques :
- Soit par câblage : dans un tel cas, les fils ne subissent pas de torsion autour de leur propre axe, en raison d'une rotation synchrone avant et après le point d'assemblage ;
- Soit par retordage : dans un tel cas, les fils subissent à la fois une torsion collective et une torsion individuelle autour de leur propre axe, ce qui génère un couple de détorsion sur chacun des fils et sur le toron ou le câble lui-même.

Conformément à l'invention, le procédé selon l'invention utilise le retordage et pas le câblage.

L'installation 70 de fabrication de chaque toron 50 comprend, d'amont en aval dans le sens de défilement du toron 50, des moyens 74 d'alimentation des M fils internes 54, des moyens 76 d'assemblage par retordage des M fils internes 54, des moyens 77 de mise en rotation des M fils internes assemblés, des moyens 78 d'alimentation des P fils externes 58, des moyens 80 d'assemblage par retordage des P fils externes 58 autour de la couche interne 52, des moyens 81 de mise en rotation de chaque toron 50, des moyens 82 d'allongement des M fils internes et des P fils externes, des moyens 83 de traction du toron 50 et des moyens 84 de stockage du toron 50.

L'installation 72 d'assemblage des torons 50 comprend, d'amont en aval, dans le sens de défilement du câble 46, des moyens d'alimentation 86 des N torons 50, des moyens 88 d'assemblages par retordage des N torons 50 ensemble, des moyens 89 de mise en rotation du câble 46, des moyens 93 d'aération et d'équilibrage du câble, des moyens 90 de traction du câble 46 et des moyens 91 de stockage du câble 46.

En référence à la figure 5, les moyens d'alimentation 74 des M fils internes 54 comprennent des bobines 92 de déroulage de chaque fil interne 54. Les moyens d'assemblage 76 des M fils internes comprennent un répartiteur 94 ainsi qu'un grain d'assemblage 96 définissant un point d'assemblage P1. Les moyens de mise en rotation 77 comprennent deux volants 97 agencés en aval du point d'assemblage P1. On parle donc d'alimentation tournante.

Les moyens d'alimentation 78 des P fils externes 58 comprennent des bobines 98 de déroulage de chaque fil externe 58. Les moyens d'assemblage 80 des P fils externes comprennent un répartiteur 100 ainsi qu'un grain d'assemblage 102 définissant un point d'assemblage P2. Les moyens de mise en rotation 81 comprennent deux volants 103 agencés en aval du point d'assemblage P2. On parle donc de réception tournante.

En référence à la figure 7, les moyens d'allongement 82 des M fils internes et des P fils externes comprennent un organe 104 monté tournant autour d'un axe de rotation X sensiblement parallèle à la direction D de défilement de chaque toron 50 dans l'organe 104. L'organe 104 monté tournant comprend au moins une poulie 106 autour d'au moins une partie de laquelle on fait défiler chaque toron 50. En l'espèce, l'organe 104 monté tournant comprend plusieurs poulies, ici deux poulies 106. Dans l'organe 104, chaque toron 50 suit un trajet définissant au moins une boucle autour d'au moins l'une des poulies 106. Ici, chaque toron suit un trajet définissant un « 8 » couché et est enroulé autour de chaque poulie 106. Ici, l'organe 104 est un retordeur deux-poulies.

Les moyens 83 de traction de chaque toron 50 comprennent un ou plusieurs cabestans 108 et les moyens 84 de stockage de chaque toron 50 comprennent une bobine 110 d'enroulage de chaque toron 50.

Chaque toron 50 est ici assemblé par retordage.

En référence à la figure 6, les moyens d'alimentation 86 des N torons 50 comprennent des bobines 112 de déroulage de chaque toron 50. Les moyens 88 d'assemblages des N torons 50 ensemble comprennent un répartiteur 114 ainsi qu'un grain d'assemblage 116 définissant un point d'assemblage P3. Les moyens 89 de mise en rotation du câble 46 comprennent deux volants 118 agencés en aval du point d'assemblage P3. Les moyens d'aération et d'équilibrage 93 comprennent un retordeur amont 124 et un retordeur aval 126. Les moyens 90 de traction du câble 46 comprennent un ou plusieurs cabestans 120 et les moyens 91 de stockage du câble 46 comprennent une bobine 122 d'enroulage du câble 46.

On va maintenant décrire un procédé de fabrication du câble 46 mis en oeuvre au moyen de l'installation 68 décrite ci-dessus.

Le procédé comprend deux étapes d'assemblage par retordage. La première étape est une étape d'assemblage individuel par retordage de chacun des N torons 50 mise en oeuvre au moyen de l'installation 70. La deuxième étape est une étape d'assemblage collectif par retordage des N torons 50 mise en oeuvre au moyen de l'installation 72.

Au cours de la première étape d'assemblage individuel par retordage, on enroule, à un pas intermédiaire p1', en hélice les M fils internes 54 pour former la couche interne 52. Ici p1'=10 mm.

Puis, toujours dans cette première étape d'assemblage individuel par retordage, on enroule, à un pas intermédiaire p2', en hélice les P fils externes 58 autour de la couche interne 52. Ici, p2'=20 mm.

Ensuite, toujours dans cette première étape d'assemblage individuel, on allonge les M fils internes 54 et les P fils externes 58 de sorte que chaque P fil externe 58 présente une longueur d'allongement supérieure à une longueur d'allongement de chaque M fil interne 54. On allonge les M fils internes 54 et les P fils externes 58 par déformation plastique au moyen des moyens 82. En l'espèce, on allonge les M fils internes 54 et les P fils externes 58 par déformation plastique en imposant une torsion additionnelle à chaque toron 50 après l'enroulement en hélice des P fils externes 58 autour de la couche interne 52. Puis, on stocke chaque toron 50 ainsi obtenu sur les moyens de stockage 84. On impose la torsion additionnelle en réglant la valeur de la vitesse de rotation de l'organe tournant 104 autour de l'axe X. L'homme du métier saura trouver la valeur de cette vitesse de rotation en fonction des longueurs d'allongements souhaitées.

Lors de l'étape d'assemblage individuel de chacun des N torons 50, on applique une tension en traction T1 à la couche interne 52. Lors de cette étape d'assemblage individuel de chacun des N torons 50, on applique également une tension T2 en traction à la couche externe 56. La tension en traction T1 appliquée à la couche interne 52 est supérieure à la tension en traction T2 appliquée à la couche externe 56.

Au cours de la deuxième étape d'assemblage collectif des N torons 50, on enroule en hélice, au pas p3, N torons 50 pour former le câble au pas p3 comme illustré sur la figure 6. Pour ce faire, lors de l'étape d'assemblage collectif des N torons 50, on enroule tout d'abord en hélice les N torons 50 au pas p3. Puis, au moyen du retordeur amont 124, on surtord les N torons 50 de façon à obtenir un pas transitoire p3'<p3. Ensuite, on détord les N torons 50 au pas p3 de façon à obtenir un couple résiduel sensiblement nul au moyen du retordeur aval 126.

Au cours de cette deuxième étape d'assemblage collectif des N torons 50, on enroule les N torons au pas p3 de sorte que les M fils internes 54 et les P fils externes 58 présentent respectivement un pas final p1 et p2 vérifiant p2/p2'<p1/p1', de préférence 1,3.p2/p2'<p1/p1'. Ici, p1=6,7 mm et p2=10 mm.

### TESTS COMPARATIFS

On a comparé ci-dessous un câble de l'état de la technique C0 et trois câbles 46, 47 et 49 selon l'invention. Les caractéristiques de ces câbles C0, 46 et 47 sont rassemblées dans le tableau 1 ci-dessous.

On a fabriqué le câble C0 selon un procédé conforme à l'état de la technique, c'est-à-dire sans étape d'allongement des M fils internes et des P fils externes. Le procédé de l'état de la technique est associé à la référence « 1 ».

On a fabriqué les câbles 46, 47 et 49 selon l'invention en mettant en oeuvre un procédé selon l'invention. Chaque câble 46 et 49 est obtenu est mettant en œuvre le procédé selon l'invention décrit ci-dessus qui est associé à la référence « 2 » dans lequel lors de l'étape d'assemblage individuel de chacun des N torons, on applique une tension en traction à la couche interne supérieure à la tension en traction appliquée à la couche externe. Le câble 47 est obtenu en mettant en oeuvre un procédé selon l'invention, qui est associé à la référence « 3 », dans lequel lors de l'étape d'assemblage individuel de chacun des N torons, on applique la même tension en traction à la couche interne et à la couche externe.

Chaque câble testé présente les pas finaux p1, p2 et p3 suivants : p1=6,7 mm, p2=10 mm et p3=20 mm.

La mesure de force à la rupture notée Fm (charge maximale en N) est effectuée en traction selon la norme ISO 6892-1 d'octobre 2009 sur des câbles directement issus du procédé de fabrication.

On a mesuré le nombre de sorties de fils internes par mètre de toron Ns en désassemblant le câble testé et en comptant, pour chaque toron, le nombre de sorties de fils internes. Ainsi, pour N torons, on obtient un nombre total de sorties de fils interne par mètre de câble. En divisant ce nombre total par N, on obtient le nombre Ns de sorties de fils interne par mètre de toron.

On a également mesuré le nombre de flambages de fils internes observé par mètre de toron Nf de façon analogue. Un flambage correspond à une courbure anormalement grande d'un fil sans que cela ne constitue pour autant une sortie radiale.

Etant dépourvu ou quasiment dépourvu de sorties de fils internes, les câbles 46, 47 et 49 ne présentent pas de diamètre variable. On évite ainsi tous les problèmes liés à cette variation du diamètre du câble ce qui rend moins fastidieux sa fabrication et réduit son coût.

En comparant les câbles 46 (procédé 2) et 47 (procédé 3), on notera le fait que d'appliquer, lors de l'étape d'assemblage individuel de chacun des N torons (câble 46, procédé 2), une tension en traction à la couche interne supérieure à la tension en traction appliquée à la couche externe permet de réduire encore davantage le nombre flambages Nf de fils internes par rapport à un procédé comprenant une étape d'assemblage durant laquelle la tension en traction appliquée à la couche interne est égale à la tension en traction appliquée à la couche externe (câble 47, procédé 3). Le fait que le câble 49 (procédé 2) présente un nombre de flambages Nf égal à celui du câble 47 (procédé 3) est lié au fait que l'allongement structurel associés Asp associé aux P fils externes du câble 49 est inférieur à celui du câble 47, ce qui favorise l'apparition des flambages par rapport au câble 47.

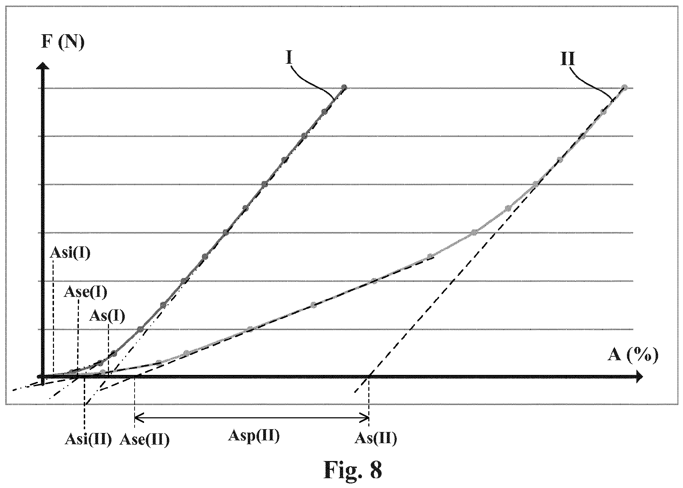

On a représenté sur la figure 8 la courbe force-allongement I d'un toron (3+8)x0.35 du câble C0 et la courbe force-allongement II d'un toron du câble 46. Chacune de ces courbes représente la variation de l'allongement A (en %, en abscisse) en fonction de la force F (en newton, en ordonnée) qu'on lui impose. Cette courbe force allongement est obtenue dans des conditions expérimentales conformes à la norme ISO 6892-1 d'octobre 2009.

On note que chaque courbe comprend trois parties. La première partie correspond au rapprochement des M fils internes les uns des autres. La deuxième partie correspond au rapprochement des P fils externes les uns des autres. La troisième partie correspond à l'allongement élastique des M fils internes et P fils externes. On a tracé pour chacune des parties la tangente à cette partie. Ainsi, la tangente à la première partie coupe l'axe des abscisses en un point Asi correspondant à l'allongement structurel associé à l'écartement des M fils internes. La tangente à la deuxième partie coupe l'axe des abscisses en un point Ase, la différence Ase-Asi correspondant à l'allongement structurel Asm associé à l'écartement des M fils internes. La tangente à la troisième partie coupe l'axe des abscisses en un point As, la différence As-Ase correspondant à l'allongement structurel Asp associé à l'écartement des P fils externes.

On note que, l'écartement de P fils externes du toron de la courbe II permet d'obtenir un toron présentant beaucoup plus d'allongement structurel associé aux P fils externes que le toron de la courbe I. En effet, l'allongement structurel Asp associé aux P fils externes du toron de la courbe II est supérieur ou égal à 0,05%, voire supérieur ou égal à 0,07%, de préférence supérieur ou égal à 0,09 %. En l'espèce, l'allongement structurel Asp associé aux P fils externes du toron de la courbe II est supérieur ou égal à 0,15%, voire supérieur ou égal à 0,20%, de préférence supérieur ou égal à 0,25 %. Ici, Asp=0,31%.

On note également que l'allongement structurel As du toron de la courbe II est bien supérieur à l'allongement structurel du toron de la courbe I. En effet, l'allongement As du toron de la courbe II est supérieur ou égal à 0,10%, de préférence supérieur ou égal à 0,15% et plus préférentiellement supérieur ou égal à 0,20%. En l'espèce, l'allongement As du toron de la courbe II est supérieur ou égal à 0,25%, de préférence supérieur ou égal à 0,30% et plus préférentiellement supérieur ou égal à 0,35%. Ici, As=0,43%.

En outre, on remarque qu'à structure identique, les câbles 46, 47 et 49 permettent un gain minimum de 5% en force à rupture par rapport au câble C0. A posteriori, les inventeurs à l'origine de l'invention ont découvert que, d'une part, dans le câble C0, les fils internes sortant entre les fils externes frottaient entre ces derniers, ce qui entrainaient une baisse de la force à rupture du câble. D'autre part, les inventeurs émettent, a posteriori, l'hypothèse selon laquelle, les M fils internes ne présentant pas de sur-longueur dans le câble selon l'invention, ces derniers contribuent, lors d'une mise en tension du câble, au même moment que les P fils externes à la résistance mécanique du câble. Au contraire, dans le câble de l'état de la technique, les M fils internes présentant une sur-longueur, ces derniers ne participent pas, lors d'une mise en tension du câble, au même moment que les P fils externes à la résistance mécanique du câble, ce qui réduit la force à rupture du câble de l'état de la technique par rapport au câble de l'invention.

**Tableau 1**

| Câble | Structure | Procédé | Grade acier | Fm N | Ase % | As % | Asp % | Ns m⁻¹ | Nf m⁻¹ |
|---|---|---|---|---|---|---|---|---|---|
| C0 | 4x(3+8)x0.35 | 1 | HT | 9173 | 0,05 | 0,09 | 0,04 | 20 | >20 |
| 46 | 4x(3+8)x0.35 | 2 | HT | 9612 | 0,12 | 0,43 | 0,31 | 0 | 2 |
| 47 | 4x(3+8)x0.35 | 3 | HT | 9495 | 0,24 | 0,35 | 0,11 | 0 | 4 |
| 49 | 4x(3+8)x0.35 | 2 | HT | 9450 | 0,11 | 0,20 | 0,09 | 0 | 4 |

L'invention ne se limite pas aux modes de réalisation précédemment décrits.

En effet, chaque toron pourra comprendre également une couche intermédiaire, intercalée entre la couche interne et la couche externe, les fils de la couche intermédiaire étant enroulés en hélice autour de la couche interne et les fils de la couche externe étant enroulés en hélice autour de la couche intermédiaire. Dans ce mode de réalisation, le câble est constitué de la couche interne, de la couche intermédiaire et de la couche externe.

## Revendications

1. Procédé de fabrication d'un câble multitorons (46) de structure 1xN comprenant une unique couche (48) de N torons (50) enroulés en hélice, chaque toron (50) comprenant :
- une couche interne (52) de M fils internes (54) enroulés en hélice,
- une couche externe (56) de P fils externes (58) enroulés en hélice autour de la couche interne (52),
le procédé étant **caractérisé en ce qu'**il comprend:
- une étape d'assemblage individuel par retordage de chacun des N torons (50) au cours de laquelle, et dans l'ordre chronologique:
- on enroule en hélice les M fils internes (54) pour former la couche interne (52),
- on enroule en hélice les P fils externes (58) autour de la couche interne (52), et
- on allonge les M fils internes (54) et les P fils externes (58) de sorte que l'allongement structurel (Asp) associé aux P fils externes (58) de chaque toron (50) est supérieur ou égal à 0,05%,
- une étape d'assemblage collectif par retordage des N torons (50) au cours de laquelle on enroule en hélice les N torons (50) pour former le câble (46) ; l'allongement structural (Asp) associé aux P fils externes étant déterminé comme suit :
- on réalise une courbe force allongement d'un toron conformément à la norme ISO 6892-1 d'octobre 2009, la courbe obtenue comprenant trois parties se succédant dans cet ordre en se déplaçant vers les allongements croissants : une première partie correspond au rapprochement des M fils internes les uns des autres ; une deuxième partie correspond au rapprochement des P fils externes les uns des autres ; une troisième partie correspond à l'allongement élastique des M fils internes et P fils externes,
- on trace, pour chacune des parties, la tangente à cette partie, la tangente à la première partie coupe l'axe des abscisses en un point Asi correspondant à l'allongement structurel associé à l'écartement des M fils internes, la tangente à la deuxième partie coupe l'axe des abscisses en un point Ase, la tangente à la troisième partie coupe l'axe des abscisses en un point As correspondant à l'allongement structurel du toron, la différence Asp=As-Ase correspondant à l'allongement structurel Asp associé à l'écartement des P fils externes.

2. Procédé selon la revendication précédente, dans lequel l'allongement structurel (Asp) de chaque toron (50) associé aux P fils externes (58) est supérieur ou égal à 0,07%, de préférence supérieur ou égal à 0,09 %.

3. Procédé selon l'une quelconque des revendications précédentes, dans lequel l'allongement structurel (As) de chaque toron (50) est supérieur ou égal à 0,10%, de préférence supérieur ou égal à 0,15% et plus préférentiellement supérieur ou égal à 0,20%.

4. Procédé selon l'une quelconque des revendications précédentes, dans lequel, lors de l'étape d'assemblage individuel de chaque toron (50), on allonge les M fils internes (54) et les P fils externes (58) de sorte que chaque P fil externe (58) présente une longueur d'allongement supérieure à une longueur d'allongement de chaque M fil interne (54).

5. Procédé selon l'une quelconque des revendications précédentes, dans lequel on allonge les M fils internes (54) et les P fils externes (58) en imposant une torsion additionnelle à chaque toron (50) après l'enroulement en hélice des P fils externes (58) autour de la couche interne (52).

6. Procédé selon la revendication précédente, dans lequel on impose la torsion additionnelle à chaque toron (50) au moyen d'un organe (104) monté tournant autour d'un axe de rotation (X) sensiblement parallèle à la direction (D) de défilement de chaque toron (50) dans l'organe (104).

7. Procédé selon la revendication précédente, dans lequel l'organe monté tournant (104) comprend au moins une poulie (106) autour d'au moins une partie de laquelle on fait défiler chaque toron (50).

8. Procédé selon la revendication précédente, dans lequel l'organe monté tournant (104) comprend au moins deux poulies (106), chaque toron (50) suivant, dans l'organe (104), un trajet définissant au moins une boucle autour d'au moins l'une des poulies (106).

9. Procédé selon l'une quelconque des revendications précédentes, dans lequel, lors de l'étape d'assemblage individuel de chacun des N torons (50), on applique :
- une tension en traction à la couche interne (52) et
- une tension en traction à la couche externe (56),
la tension en traction appliquée à la couche interne (52) étant supérieure à la tension en traction appliquée à la couche externe (56).

10. Procédé selon l'une quelconque des revendications précédentes, dans lequel, lors de l'étape d'assemblage collectif des N torons (50) :
- on enroule en hélice les N torons (50) à un pas p3,
- on surtord les N torons (50) de façon à obtenir un pas transitoire p3'<p3,
- on détord les N torons (50) au pas p3 de façon à obtenir un couple résiduel sensiblement nul.

11. Procédé selon l'une quelconque des revendications précédentes, dans lequel,
- au cours de l'étape d'assemblage individuel de chacun des N torons (50), on enroule les M fils internes (54) et les P fils externes (58) respectivement à des pas intermédiaires p1' et p2',
- au cours de l'étape d'assemblage collectif des N torons (50), on enroule les N torons à un pas p3 de sorte que les M fils internes (54) et les P fils externes (58) présentent respectivement un pas final p1 et p2 vérifiant p2/p2'<p1/p1', de préférence 1,3.p2/p2'<p1/p1'.

12. Câble multitorons (46) de structure 1xN, **caractérisé en ce qu'**il est obtenu par un procédé selon l'une quelconque des revendications précédentes, dans lequel chaque toron (50) comprend au plus 10 sorties radiales de fils internes par mètre de toron (50).

13. Câble multitorons (46) selon la revendication 12, dans lequel :
- N=3 ou N=4, de préférence N=4,
- M=3, 4 ou 5, de préférence M=3, et
- P=7, 8, 9, 10 ou 11, de préférence P=8.

14. Câble multitorons (46) selon la revendication 12 ou 13, dans lequel la couche externe (56) de chaque toron (50) est non compacte.

15. Câble multitorons (46) selon l'une quelconque des revendications 12 à 14, dans lequel :
- les M fils internes (54) étant enroulés en hélice au pas p1, p1 va de 3 à 11 mm, de préférence de 5 à 9 mm, - les P fils externes (58) étant enroulés en hélice au pas p2, p2 va de 6 à 14 mm, de préférence de 8 à 12 mm, et
- les N torons (50) étant enroulés en hélice au pas p3, p3 va de 10 à 30 mm, de préférence de 15 à 25 mm.

16. Pneumatique (10) pour véhicule de génie civil, **caractérisé en ce qu'**il comprend un câble multitorons (46) selon l'une quelconque des revendications 12 à 15.

## Patentansprüche

1. Verfahren zur Herstellung eines mehrlitzigen Seils (46) mit 1xN-Struktur, welches eine einzige Schicht (48) aus N spiralförmig gewickelten Litzen (50) umfasst, wobei jede Litze (50) umfasst:
- eine innere Schicht (52) aus M spiralförmig gewickelten inneren Drähten (54),
- eine äußere Schicht (56) aus P spiralförmig um die innere Schicht (52) gewickelten äußeren Drähten (58),
wobei das Verfahren **dadurch gekennzeichnet ist, dass** es umfasst:
- einen Schritt des einzelnen Zusammenbaus jeder der N Litzen (50) durch Verdrillung, in welchem, in chronologischer Reihenfolge,
- die M inneren Drähte (54) spiralförmig gewickelt werden, um die innere Schicht (52) zu bilden,
- die P äußeren Drähte (58) spiralförmig um die innere Schicht (52) gewickelt werden, und
- die M inneren Drähte (54) und die P äußeren Drähte (58) derart gedehnt werden, dass die strukturelle Dehnung (Asp), die den P äußeren Drähten (58) jeder Litze (50) zugeordnet ist, größer oder gleich 0,05 % ist,
- einen Schritt des gemeinsamen Zusammenbaus der N Litzen (50) durch Verdrillung, in welchem die N Litzen (50) spiralförmig gewickelt werden, um das Seil (46) zu bilden;
wobei die strukturelle Dehnung (Asp), die den P äußeren Drähten zugeordnet ist, wie folgt bestimmt wird:
- Es wird eine Kraft-Dehnungs-Kurve einer Litze gemäß der Norm ISO 6892-1 vom Oktober 2009 erstellt, wobei die erhaltene Kurve drei Teile umfasst, die, in Richtung zunehmender Dehnungen betrachtet, in dieser Reihenfolge aufeinanderfolgen: ein erster Teil, welcher der Annäherung der M inneren Drähte aneinander entspricht; ein zweiter Teil, welcher der Annäherung der P äußeren Drähte aneinander entspricht; ein dritter Teil, welcher der elastischen Dehnung der M inneren Drähte und P äußeren Drähte entspricht,
- es wird, für jeden der Teile, die Tangente an diesen Teil gezeichnet; die Tangente an den ersten Teil schneidet die Abszissenachse in einem Punkt Asi, welcher der strukturellen Dehnung entspricht, die dem Abstand der M inneren Drähte zugeordnet ist; die Tangente an den zweiten Teil schneidet die Abszissenachse in einem Punkt Ase; die Tangente an den dritten Teil schneidet die Abszissenachse in einem Punkt As, welcher der strukturellen Dehnung der Litze entspricht, wobei die Differenz Asp = As -Ase der strukturellen Dehnung Asp entspricht, die dem Abstand der P äußeren Drähte zugeordnet ist.

2. Verfahren nach dem vorhergehenden Anspruch, wobei die strukturelle Dehnung (Asp) jeder Litze (50), die den P äußeren Drähten (58) zugeordnet ist, größer oder gleich 0,07 % ist, vorzugsweise größer oder gleich 0,09 %.

3. Verfahren nach einem der vorhergehenden Ansprüche, wobei die strukturelle Dehnung (As) jeder Litze (50) größer oder gleich 0,10 % ist, vorzugsweise größer oder gleich 0,15 % und stärker bevorzugt größer oder gleich 0,20 %.

4. Verfahren nach einem der vorhergehenden Ansprüche, wobei im Schritt des einzelnen Zusammenbaus jeder Litze (50) die M inneren Drähte (54) und die P äußeren Drähte (58) derart gedehnt werden, dass jeder der P äußeren Drähte (58) eine Dehnungslänge aufweist, die größer als eine Dehnungslänge jedes der M inneren Drähte (54) ist.

5. Verfahren nach einem der vorhergehenden Ansprüche, wobei die M inneren Drähte (54) und die P äußeren Drähte (58) gedehnt werden, indem auf jede Litze (50) nach dem spiralförmigen Wickeln der P äußeren Drähte (58) um die innere Schicht (52) eine zusätzliche Verdrehung ausgeübt wird.

6. Verfahren nach dem vorhergehenden Anspruch, wobei die zusätzliche Verdrehung auf jede Litze (50) mittels eines Organs (104) ausgeübt wird, das um eine Drehachse (X) drehend angebracht ist, die im Wesentlichen parallel zur Durchlaufrichtung (D) jeder Litze (50) in dem Organ (104) ist.

7. Verfahren nach dem vorhergehenden Anspruch, wobei das drehend angebrachte Organ (104) wenigstens eine Scheibe (106) umfasst, wobei man jede Litze (50) um wenigstens einen Teil derselben herumlaufen lässt.

8. Verfahren nach dem vorhergehenden Anspruch, wobei das drehend angebrachte Organ (104) wenigstens zwei Scheiben (106) umfasst, wobei jede Litze (50) in dem Organ (104) einem Weg folgt, der wenigstens eine Schleife um wenigstens eine der Scheiben (106) definiert.

9. Verfahren nach einem der vorhergehenden Ansprüche, wobei im Schritt des einzelnen Zusammenbaus jeder der N Litzen (50) ausgeübt werden:
- eine Zugspannung auf die innere Schicht (52) und
- eine Zugspannung auf die äußere Schicht (56), wobei die Zugspannung, die auf die innere Schicht (52) ausgeübt wird, größer als die Zugspannung ist, die auf die äußere Schicht (56) ausgeübt wird.

10. Verfahren nach einem der vorhergehenden Ansprüche, wobei im Schritt des gemeinsamen Zusammenbaus der N Litzen (50):
- die N Litzen (50) mit einer Ganghöhe p3 spiralförmig gewickelt werden,
- die N Litzen (50) zusätzlich verdreht werden, so dass eine Übergangs-Ganghöhe p3' < p3 erhalten wird,
- die N Litzen (50) auf die Ganghöhe p3 auseinandergedreht werden, so dass ein Restmoment erhalten wird, das im Wesentlichen null ist.

11. Verfahren nach einem der vorhergehenden Ansprüche, wobei
- im Schritt des einzelnen Zusammenbaus jeder der N Litzen (50) die M inneren Drähte (54) und die P äußeren Drähte (58) mit Zwischenganghöhen p1' bzw. p2' gewickelt werden,
- im Schritt des gemeinsamen Zusammenbaus der N Litzen (50) die N Litzen mit einer Ganghöhe p3 gewickelt werden, derart, dass die M inneren Drähte (54) und die P äußeren Drähte (58) endgültige Ganghöhen p1 bzw. p2 aufweisen, für die p2/p2' < p1/p1' gilt, vorzugsweise 1,3.p2/p2' < p1/p1'.

12. Mehrlitziges Seil (46) mit 1xN-Struktur, **dadurch gekennzeichnet, dass** es mit einem Verfahren nach einem der vorhergehenden Ansprüche hergestellt ist, wobei jede Litze (50) höchstens 10 radiale Austritte innerer Drähte pro Meter Litze (50) umfasst.

13. Mehrlitziges Seil (46) nach Anspruch 12, wobei:
- N = 3 oder N = 4, vorzugsweise N = 4,
- M = 3, 4 oder 5, vorzugsweise M = 3, und
- P = 7, 8, 9, 10 oder 11, vorzugsweise P = 8.

14. Mehrlitziges Seil (46) nach Anspruch 12 oder 13, wobei die äußere Schicht (56) jeder Litze (50) nicht kompakt ist.

15. Mehrlitziges Seil (46) nach einem der Ansprüche 12 bis 14, wobei:
- wenn die M inneren Drähte (54) mit der Ganghöhe p1 spiralförmig gewickelt sind, p1 3 bis 11 mm beträgt, vorzugsweise 5 bis 9 mm,
- wenn die P äußeren Drähte (58) mit der Ganghöhe p2 spiralförmig gewickelt sind, p2 6 bis 14 mm beträgt, vorzugsweise 8 bis 12 mm, und
- wenn die N Litzen (50) mit der Ganghöhe p3 spiralförmig gewickelt sind, p3 10 bis 30 mm beträgt, vorzugsweise 15 bis 25 mm.

16. Reifen (10) für ein Baufahrzeug, **dadurch gekennzeichnet, dass** er ein mehrlitziges Seil (46) nach einem der Ansprüche 12 bis 15 umfasst.

## Claims

1. Method for manufacturing a multistrand rope cord (46) of 1xN structure comprising a single layer (48) of N strands (50) wound in a helix, each strand (50) comprising:
- an internal layer (52) of M internal threads (54) wound in a helix,
- an external layer (56) of P external threads (58) wound in a helix around the internal layer (52),
the method being **characterized in that** it comprises:
- a step of individually assembling each of the N strands (50) by twisting, during which, and in chronological order:
- the M internal threads (54) are wound in a helix to form the internal layer (52),
- the P external threads (58) are wound in a helix around the internal layer (52), and
- the M internal threads (54) and the P external threads (58) are elongated such that the structural elongation (Asp) associated with the P external threads (58) of each strand (50) is greater than or equal to 0.05%,
- a step of collectively assembling the N strands (50) by twisting, during which the N strands (50) are wound in a helix to form the cord (46).

2. Method according to the preceding claim, wherein the structural elongation (Asp) of each strand (50) associated with the P external threads (58) is greater than or equal to 0.07%, preferably greater than or equal to 0.09%.

3. Method according to either one of the preceding claims, wherein the structural elongation (As) of each strand (50) is greater than or equal to 0.10%, preferably greater than or equal to 0.15% and more preferably greater than or equal to 0.20%.

4. Method according to any one of the preceding claims, wherein, during the step of individually assembling each strand (50), the M internal threads (54) and the P external threads (58) are elongated such that each P external thread (58) has an elongation length greater than an elongation length of each M internal thread (54).

5. Method according to any one of the preceding claims, wherein the M internal threads (54) and the P external threads (58) are elongated by applying an additional twist to each strand (50) after the P external threads (58) have been wound in a helix around the internal layer (52).

6. Method according to the preceding claim, wherein the additional twist is applied to each strand (50) by means of a member (104) that is mounted so as to rotate about an axis of rotation (X) substantially parallel to the direction (D) in which each strand (50) passes through the member (104).

7. Method according to the preceding claim, wherein the member (104) that is mounted so as to rotate comprises at least one pulley (106), around at least a part of which each strand (50) is made to pass.

8. Method according to the preceding claim, wherein the member (104) that is mounted so as to rotate comprises at least two pulleys (106), each strand (50) following, in the member (104), a path that defines at least one loop around at least one of the pulleys (106).

9. Method according to any one of the preceding claims, wherein, during the step of individually assembling each of the N strands (50):
- a tensile force is applied to the internal layer (52) and
- a tensile force is applied to the external layer (56),
the tensile force applied to the internal layer (52) being greater than the tensile force applied to the external layer (56).

10. Method according to any one of the preceding claims, wherein, during the step of collectively assembling the N strands (50):
- the N strands (50) are wound in a helix at a pitch p3,
- the N strands (50) are overtwisted so as to obtain a temporary pitch p3'<p3,
- the N strands (50) are untwisted to the pitch p3 so as to obtain a residual torque of substantially zero.

11. Method according to any one of the preceding claims, wherein,
- during the step of individually assembling each of the N strands (50), the M internal threads (54) and the P external threads (58) are wound at intermediate pitches p1' and p2', respectively,
- during the step of collectively assembling the N strands (50), the N strands are wound at a pitch p3 such that the M internal threads (54) and the P external threads (58) have final pitches p1 and p2, respectively, satisfying p2/p2'<p1/p1', preferably 1,3p2/p2'<p1/p1'.

12. Multistrand rope cord (46) of 1xN structure, **characterized in that** it is able to be obtained by a method according to any one of the preceding Claims, in which each strand (50) comprises at most 10 instances of radial emergence of internal threads per metre of strand.

13. Multistrand rope cord (46) according to Claim 12, wherein:
- N=3 or N=4, and preferably N=4,
M=3, 4 or 5, and preferably M=3 and
- P=7, 8, 9, 10 or 11, and preferably P=8.

14. Multistrand rope cord (46) according to Claims 12 or 13, wherein the external layer (56) of each strand (50) is not compact.

15. Multistrand rope cord (46) according to any one of Claims 12 to 14, wherein, with the M internal threads (54) being wound in a helix at the pitch p1, p1 ranges from 3 to 11 mm, preferably from 5 to 9 mm;
- the P external threads (58) being wound in a helix at the pitch p2, p2 ranges from 6 to 14 mm, preferably from 8 to 12 mm and;
- the N strands (50) being wound in a helix at the pitch p3, p3 ranges from 10 to 30 mm, preferably from 15 to 25 mm.

16. Tyre (10) for a construction plant vehicle, **characterized in that** it comprises a multistrand rope cord (46) according to any one of Claims 12 to 15.
